# EUROPEAN PATENT APPLICATION

(11) **EP 4 335 531 A1**
(43) Date of publication of application: **13.03.2024**
(21) Application number: 23191908.5
(22) Date of filing: 17.08.2023
(51) Int. Cl.: A63F 13/30, A63F 13/57, A63F 13/58, A63F 13/67, G06F 3/01

(54) **SYSTEMS AND METHODS OF PROTECTING PERSONAL SPACE IN MULTI-USER VIRTUAL ENVIRONMENT**

(30) Priority: 08.09.2022 GB 202213137
(71) Applicant: Sony Interactive Entertainment Inc., Tokyo 108-0075 (JP)
(72) Inventor: MONTI, Maria Chiara, London W1F 7LP (GB); MICHAILIDIS, Lazaros, London W1F 7LP (GB); BUCHANAN, Christopher George, London W1F 7LP (GB); JIMENEZ, Daniel P, London W1F 7LP (GB)
(74) Representative: D Young & Co LLP

(57) **Abstract**

A method for protecting personal space in a multi-user virtual environment, comprising the steps of generating an avatar for a target user in the multi-user virtual environment; determining a relationship score between the target user and a peer user; creating a personal space around the avatar of the target user, wherein the dimensions of the personal space is computed based on the relationship score with the peer user; detecting the peer user's avatar crossing the boundary of the personal space; and applying rules to the peer user to restrict his/her interactions with the target user.

## Description

### BACKGROUND OF THE INVENTION

### Field of the invention

The present invention relates to multi-user virtual environment systems and methods.

### Description of the Prior Art

Multi-user online virtual environment systems are online systems where users at different physical locations are able to use individual client devices to join a digital space hosted by a server. Users are able to interact with the virtual environment by sending requests from the client devices to the server, and the server responds by providing services according to the requests. With the development of virtual reality technologies, modern virtual environment systems are capable of rendering three dimensional graphics through a first person viewpoint, thereby providing a more immersive user experience.

In the meantime, the extra layer of immersion offered by virtual environment systems could be a double edged sword. In the case of cyber bullying or harassment, the visual stimuli induced by virtual reality makes it easier for the user to invest in and portray himself/herself as the avatar in the virtual world and hence could significantly amplify feelings caused by any cyber violation, compared to a system in two dimensional graphics.

Current approaches to handling online bullying and harassment in virtual environment systems include providing reporting mechanisms for the victims to make a complaint against any committed assaults. A typical example of this would be a recording system for the user to record the scene of bad behaviour as evidence. Nevertheless, the conventional arrangements tend to suffer from one or more of a multiplicity of drawbacks:
Firstly, the reporting mechanisms are reactive measures and hence less effective in preventing cyber toxicity from happening.
Secondly, the victim may experience panic upon the assault and may not be able to activate the recording system in time.

The present invention seeks to mitigate or alleviate some or all of the above-mentioned problems.

### SUMMARY OF THE INVENTION

Various aspects and features of the present invention are defined in the appended claims and within the text of the accompanying description.

In a first aspect, a method for protecting personal space in a multi-user virtual environment is provided in accordance with claim 1.

In another aspect, a system for protecting personal space in a multi-user virtual environment is provided in accordance with claim 14.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of a multi-user virtual environment system in accordance with embodiments of the present application;
- Figure 2 is a schematic diagram of an entertainment device in accordance with embodiments of the present application;
- Figure 3 is a schematic diagram of a virtual environment server in accordance with embodiments of the present application;
- Figure 4 is a perspective view of an example scenario in which a personal space is provided in a multi-user virtual environment system in accordance with embodiments of the present application;
- Figure 5 is a first person view of an example scenario in which a peer user approaches the target user's personal space in a multi-user virtual environment system in accordance with embodiments of the present application;
- Figure 6 is a first person view of an example scenario in which the target user approaches a peer user's personal space in a multi-user virtual environment system in accordance with embodiments of the present application;
- Figure 7 is an example scenario showing the aggregation of multiple personal spaces in a multi-user virtual environment system in accordance with embodiments of the present application;
- Figure 8 is an example scenario showing the subtraction of multiple personal spaces in a multi-user virtual environment system in accordance with embodiments of the present application;
- Figure 9 is an example scenario showing the expansion of personal space in a multi-user virtual environment system in accordance with embodiments of the present application;
- Figure 10A and 10B are rule-based models for determining the dimensions of a personal space in a multi-user virtual environment system in accordance with embodiments of the present application;
- Figure 11 is a neural network for determining the dimensions of a personal space in a multi-user virtual environment system in accordance with embodiments of the present application; and
- Figures 12 is a flow diagram describing a process of protecting personal space in a multi-user virtual environment in accordance with embodiments of the present application.

### DESCRIPTION OF THE EMBODIMENTS

Systems and methods for protecting personal space in multi-user virtual environment are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

Embodiments of the present description are applicable to a multi-user virtual environment system involving a computer server or videogame server, a computer client or videogame console, a development kit for such a system, or a multi-user computer system using dedicated hardware or a computer and suitable controllers. In the present application terms such as 'personal space', 'personal zone', 'safety zone', 'safety bubble' may be used interchangeably except where indicated otherwise.

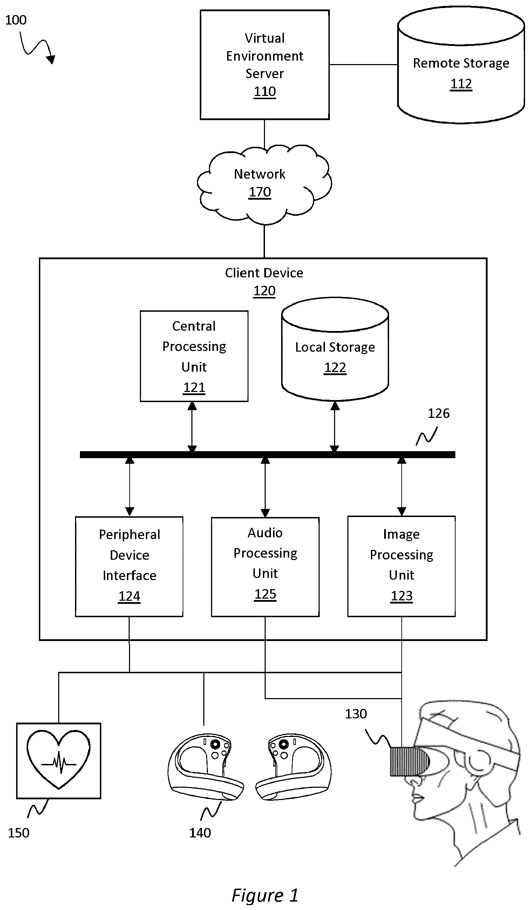

For the purposes of explanation and referring now to the drawings, wherein like reference numerals designate identical or corresponding parts throughout the several views, Figure 1 illustrates a schematic diagram of a multi-user virtual environment system in accordance with embodiments of the present application. The multi-user virtual environment system 100 may comprise a virtual environment server 110, a client device 120, an output device 130, a user input device 140, a biometric measurement device 150, and a network 160. In some cases, the biometric measurement device 150 may be integral to the user input device 140.

According to embodiments of the present application, the multi-user virtual environment system 100 allows users to operate an avatar in a virtual environment under a personal space which protects a given target user from abuse or harassment induced by peer users. The virtual environment may be a social virtual environment in which multiple users participate a social event, or a game virtual environment in which multiple players play an online game. The target user may experience bullying or harassment within the virtual environment, especially in virtual reality. In order to alleviate episodes of harassment, a personal space such as in the form of safety bubble may be implemented. In essence, the personal space enforces boundaries between the avatar of the target user and the peer users' avatars, such that rules and requirements are enforced within the boundaries to protect the target user.

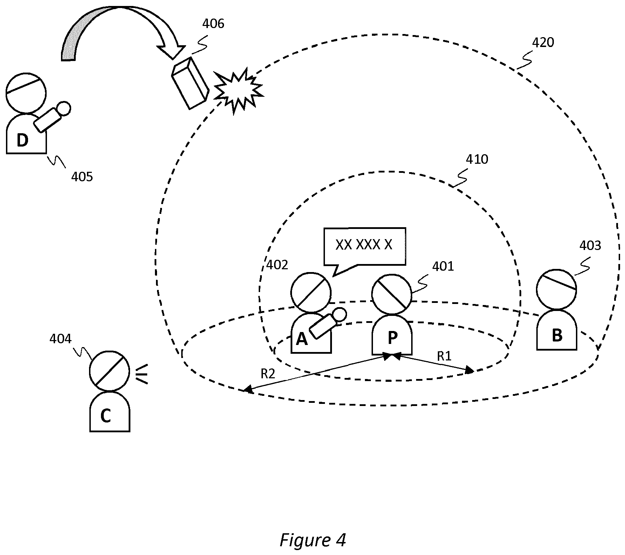

According to embodiments of the present application, a personal safety bubble in a virtual environment defaults to a hemispheric volume of space surrounding the user's avatar which fulfils some interaction requirements, either predefined or customizable. The requirements may restrict access to the user's personal space by other peer users' avatars and/or virtual objects. For example, other peer users may not be allowed to enter the personal space, or only friends may be allowed. The target user may also be notified when his/her personal space is collided with. Additionally, the personal space may specifically activate only when other avatars approach a user above a threshold speed. In the case of a virtual object, the ability to cross the personal space boundary may depend on the object's characteristics, such as size, speed of movement, whether it is producing loud sounds or whether it is considered offensive or threatening. Further details of the effects of the personal space will be described with reference to Figures 4 to 10B.

According to embodiments of the present application, algorithms based on machine learning may be used to determine whether a peer user's avatar or a virtual object should be allowed inside the personal space, for example by analysing the text message or speech of the peer user and looking for disrespectful or violent language. Similarly, the characteristics of the object (size, material, what it is normally used for, speed at which it is moving and direction of movement, and so on) can be analysed to identify threatening objects based on the ways the user interacts with them. In some embodiments, rule-based algorithms may be used to determine the activation of the personal space.

In some embodiments, the personal space does not need to be static, but can be dynamic depending on certain elements, for example the inferred level of stress/discomfort of the user based on biometric data such as detected heart rate, breath rate, or blood pressure of the user. In some embodiments, the size and dimensions of personal space may also depend on the user's specified preferences or behaviours exhibited in previous social interactions. For example, if a user is always reducing the size of their bubble to interact with other users, an algorithm based on machine learning model can learn this and adapt to the user's behaviour. Further details of the various algorithms controlling the size and activation of the personal space will be described with reference to Figures 4, 10A, 10B and 11.

According to embodiments of the present application, the dimensions of the personal space may increase with the number of friendly users present at the same location in the virtual environment, such that a larger personal space is created for a large crowd of avatars to avoid feeling overwhelmed.

Referring to Figure 1, the virtual environment server 110 executes program codes stored in remote storage 112 for creating a virtual environment which contains virtual objects and avatars of various users. A given target user may enter the virtual environment by connecting to the virtual environment server 110 via the client device 120, such as the Sony ^{®} PlayStation 5 ^{®} (PS5), over the network 160, such as the Internet. In the virtual environment, the user may operate the input device 140 such as a pair of virtual reality controllers to interact with the avatars of other peer users, which includes conducting conversations, attending meetings, watching movies, and playing games.

The virtual environment server 110 further generates feedbacks on the output device 130, such as a virtual reality head set, to the target user based on his/her interaction with avatar of peer users and virtual objects, including visual feedback such as video streams of the virtual environment based on the user's perspective; audio feedback such as instructions, background music, voice of peer users, audio tracks and sound effects of the virtual environment; and haptic feedback effects such as vibration on the input device 140.

Referring to the virtual environment system 100 in Figure 1, the client device 120 comprises a central processing unit 121, a local storage 122, an image processing unit 123, a peripheral device interface 124, and an audio processing unit 125. The components of the client device 120 are connected via a bus 126.

The central processing unit 121 executes program codes loaded from the local storage 124, in order to run client applications for the target user to communicate with the virtual environment server 110, such as sending requests and receiving services in relation to the virtual environment. The central processing unit 121 may further provide an interface for the user to interact with the virtual environment. In addition, the client device 120 may store and load user save data and user settings in the local storage 122. Alternatively or in addition, the user save data and user settings may be stored in remote storage 112 at the virtual environment server 110. User operations performed on the input device 140, such as virtual reality controllers, are converted to electrical signals which are subsequently received at the peripheral device interface 124. Other feedback data such as voice input and biometric data may be respectively collected from a built-in microphone of a virtual reality headset and the biometric measurement device 150 via the peripheral device interface 124. The central processing unit 121 processes the input signals and feedback data acquired by the peripheral device interface 124 and transmits them to the virtual environment server 110 based on predetermined communication protocols.

According to embodiments of the present application, the image processing unit 123 may render 2D or 3D computer graphics for the virtual environment generated by the virtual environment server 110. The image processing unit 123 subsequently generates video signals for the computer graphics and transmits the video signals to the output device 130, such as a display integrated in a virtual reality headset.

Additionally, the audio processing unit 125 receives voice and audio data from the virtual environment server 110, then decompresses and decodes the data into audio signals for playback at the output device 130, such as a speaker system integrated with a virtual reality headset.

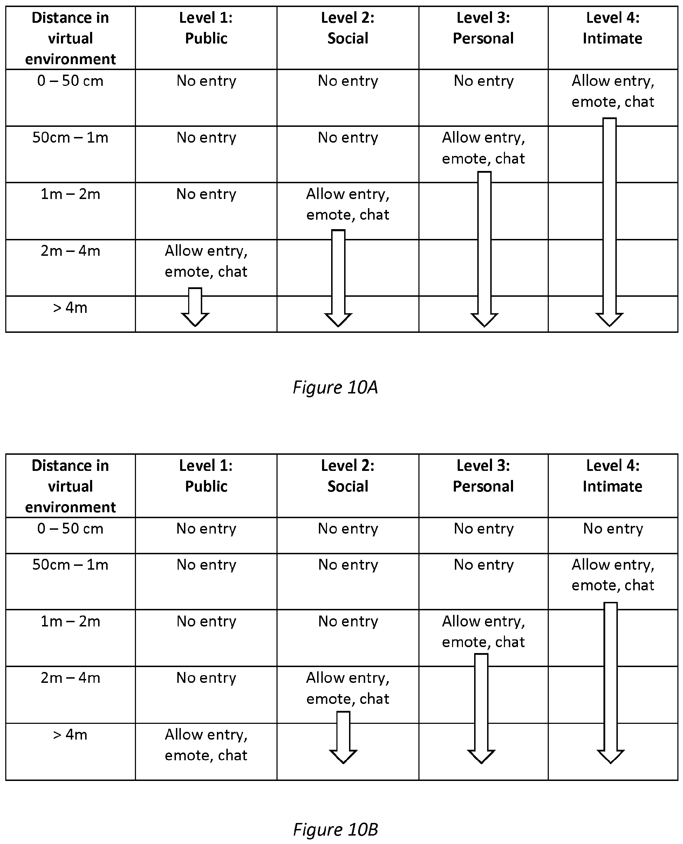

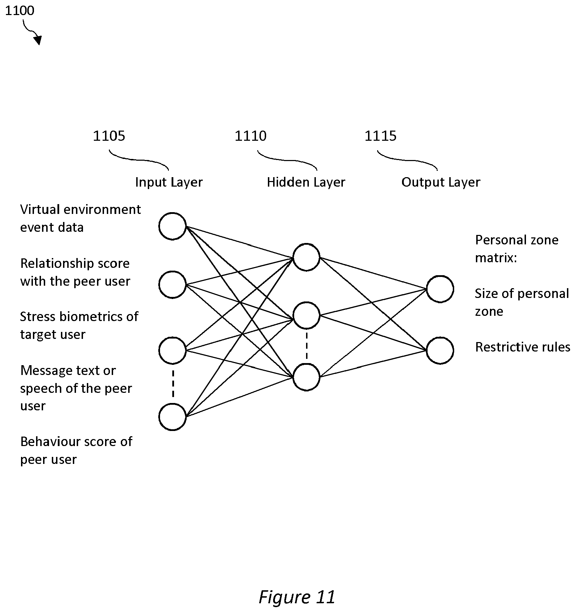

According to embodiments of the present application, the virtual environment server 110 generates a personal space around the user's avatar in the virtual environment, with the dimensions of the personal space determined by a personal space model 111. The personal space model 111 factors in input parameters such as relationship score with the peer user, behaviour score of the peer user, message text or speech delivered by the peer user, or stress biometrics of the target user. Based on rule-based algorithms or machine learning algorithms, the personal space model 111 outputs a desirable size of the personal space and restrictions to be imposed by the personal space, in order to protect the target user from bullying and harassment. Further details of the personal space model 111 will be described with reference to Figures 10A, 10B and 11.

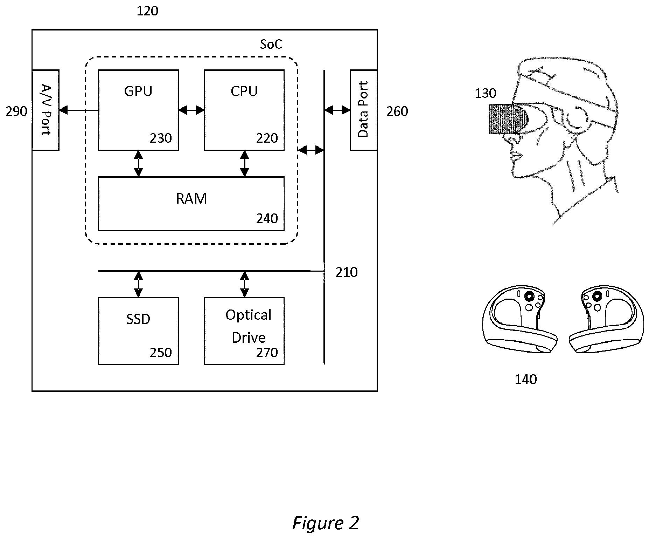

Figure 2 illustrates a schematic diagram of an entertainment device in accordance with embodiments of the present application. The entertainment device may serve as the client device 120 in Figure 1 and comprise a central processor 220. This may be a single or multi core processor, for example comprising eight cores as in the PS5. The entertainment device also comprises a graphical processing unit or GPU 230. The GPU can be physically separate to the CPU, or integrated with the CPU as a system on a chip (SoC) as in the PS5.

The entertainment device also comprises RAM 240, and may either have separate RAM for each of the CPU and GPU, or shared RAM as in the PS5. The or each RAM can be physically separate, or integrated as part of an SoC as in the PS5. Further storage is provided by a disk 250, either as an external or internal hard drive, or as an external solid state drive, or an internal solid state drive as in the PS5.

The entertainment device may transmit or receive data via one or more data ports 260, such as a USB port, Ethernet ^{®} port, WiFi ^{®} port, Bluetooth ^{®} port or similar, as appropriate. It may also optionally receive data via an optical drive 270.

Interaction with the system is typically provided using one or more handheld controllers 280, such as the DualSense ^{®} controller in the case of the PS5, or virtual reality controllers 140.

Audio/visual outputs from the entertainment device are typically provided through one or more A/V ports 290, or through one or more of the wired or wireless data ports 260.

Where components are not integrated, they may be connected as appropriate either by a dedicated data link or via a bus 210.

An example of a device for displaying images output by the entertainment system is a head mounted display 'HMD' 130, worn by a user.

Such an entertainment device may be used as a client device 120 in a multi-user virtual environment system 100 for two or more users to interact with each other in a virtual environment under the protection offered by personal safety zones. It will be appreciated that this is a non-limiting example and that as noted previously herein other examples of a game client may include a phone or smart television.

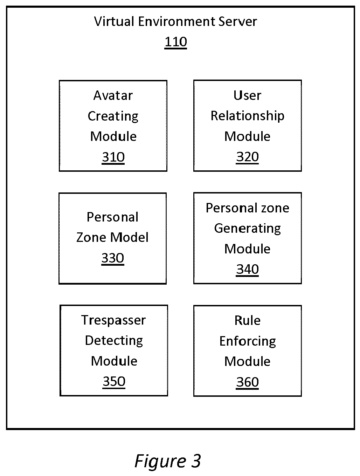

Figure 3 illustrates a schematic diagram of a virtual environment server 110 of Figure 1 in accordance with embodiments of the present application. The virtual environment server 110 comprises an avatar creating module 310, a user relationship module 320, a personal space model 330, a personal space generating module 340, a trespasser detecting module 350, and a rule enforcing module 360. In operation, the user connects to the virtual environment server 110 through the client device 120. After successful authentication, the virtual environment server 110 loads user data from the local storage 122 or remote storage 112. The user data may include information of the target user's profile, service subscription, and device configuration. Additionally, the user data may include the information about a representation of the target user in the virtual environment, namely an avatar, such as the avatar's appearance, clothing and inventories. Based on these user data, the avatar creating module 310 generates an avatar such that the target user can interact with avatars of peer users and virtual objects in the virtual environment.

In the event that other peer users' avatars are present in the virtual environment, the user relationship module 320 maintains a relationship score for each peer user, representing different levels of relationship between the target user and the relevant peer user. For example, the relationship score may be rated on a 1-to-10 scale with 1 denoting the most hostile relationship and 10 denoting the most intimate relationship. The relationship score may be given by the user, and may be modified by the user relationship module 320 according to the social interaction between the target user and the peer user as their relationship in the virtual environment develops. For instance, the user relationship module 320 may increase the relationship score when a positive social interaction happens between the target user and the peer user, and vice versa. The relationship score may be stored as part of the user data in the local storage 122 or remote storage 112. The user relationship module 320 may retrieve the relationship score from the local storage 122 or remote storage 112 when the target user encounters the corresponding peer user in the virtual environment in future. Optionally relationship scores may be persistent between sessions for other users identified as friends of the user, and/or for other users who the user has blocked, reported, or otherwise indicated as being unwelcome. Meanwhile similarly optionally relationship scores for other users may be a per-session score initialised as neutral, or a score also based on commonalities between their user profiles and those of the user (e.g. age, gender, declared interests, game-play history and the like).

The personal space model 330 contains algorithms that determines the dimensions of the personal space based on the relationship score with respect to a particular peer user obtained from the user relationship module 320. According to embodiments of the present application, the personal space may be a hemispheric volume of space surrounding the target user and the personal space model 330 may determine the radius of the hemisphere. In some embodiments, the personal space may be a cylindrical volume of space around the target user and the personal space model 330 may determine the radius and height of the cylinder. The dimensions of personal spaces may vary between peer users since their relationship scores with the target user may not be the same. In some embodiments, the personal space model 330 may take into account of additional factors, such as the status of the target user. For example, if the target user is focusing on a particular task in the virtual environment such as watching a movie, he/she may change the status from available to busy, and the personal space model 330 may increase the dimensions of the personal space to avoid disturbance from peer avatars in proximity. Further details of the various algorithms controlling the dimensions of the personal space will be described with reference to Figures 10A, 10B and 11.

Once the dimensions of the personal space have been determined by the algorithms of the personal space model 330, the personal space generating module 340 creates a personal space surrounding the target user based on the determined dimensions. When a peer user's avatar crosses the boundary of the personal space, it will be detected by the trespasser detecting module 350 and the rule enforcing module 360 will apply rules or requirements to the peer user to restrict his/her interaction with the target user. The rules applied to the peer user whose avatar enters the personal space may include: restricting movements of the peer user, silencing a chat of the peer user, disabling an action of the peer user, and nullifying an effect of the peer user's action such as using a virtual object.

The arrangement according to embodiments of the present application is beneficial by providing multiple levels of personal spaces in the virtual environment based on relationship types which resemble proxemics, or personal space, in real life experience.

Figure 4 illustrates an example scenario in which a personal space is provided in a multi-user virtual environment system in accordance with embodiments of the present application. The example scenario describes a virtual environment in which the target user P's avatar 401 encounters various events under the protection of personal spaces. In Figure 4, two levels of personal spaces have been activated for the target user P's avatar 401. Personal space 410 has a smaller radius R1 and allows only peer users of intimate relationship with the target user P to enter, such as user A in Figure 4. Apart from moving around in target user P's intimate personal space 410, peer user A's avatar 402 is also allowed to interact with the target user P's avatar 401, this may include chatting and performing gestures or emotes, such as waving, pointing, cheering, salute, and dancing.

On the other hand, personal space 420 has a larger radius R2 and allows peer users of friendly relationship to enter, such as peer user B in Figure 4. However, user B's avatar 403 is not allowed to enter the intimate personal space 410 but can only interact with target user P's avatar 401 from a distance R1. As discussed above, the interaction may include chatting with target user P and performing gestures or emotes, such as waving, pointing, cheering, salute, and dancing.

For strangers such as peer user C and peer user D in Figure 4, their avatars 404 and 405 are not permitted to enter even the friendly personal space 420, and in effect are required to stay away from target user P at a minimum distance R2. The interaction of stranger peer users with target user P is also limited, and the effect of their actions may also be nullified. For example, the voice of peer user C's avatar may not be heard by target user P, and some or all gestures or actions may not be shown. In some embodiments, if a stranger peer user performs an action on a virtual object, the effect of the virtual object may be blocked from the personal space. For instance, when peer user D's avatar 405 throws a brick 406 at target user P's avatar 401, the trajectory of brick 406 may be deflected at the boundary of the personal space 420.

According to embodiments of the present applications, the optionally restrictive rules of a personal space will only be activated when a peer user's avatar or a virtual object move above a threshold speed.

Although Figure 4 only shows two levels of personal space, any number of levels is envisaged depending on the classification of user relationship in the virtual environment.

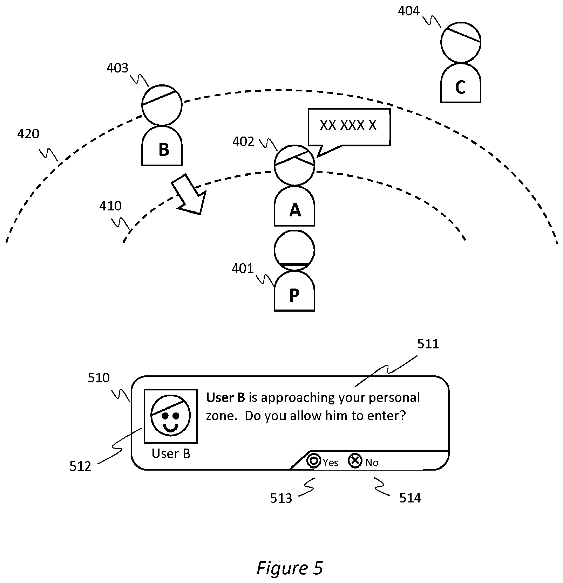

Figure 5 illustrates an example scenario from a first person view of the target user's avatar, in which a peer user approaches the target user's personal space in a multi-user virtual environment system in accordance with embodiments of the present application. The example scenario describes that the target user P is having a conversation with another peer user A whose avatar 402 is in the intimate personal space. In the meantime, peer user B, who has a friendly relationship with the target user P and therefore allowed in the friendly personal space 420, wishes to move closer to the target user P's avatar 401 and enter the intimate personal space 410.

When peer user B's avatar 403 crosses the boundary of the personal space 410, the avatar will not be allowed to approach further and a message box 510 may be automatically displayed in the graphical user interface of the target user P. The message box 510 may contain a portrait 512 of peer user B's avatar 403 and a text message 511 alerting the target user P that peer user B's avatar 403 is trying to enter personal space 410, while of the target user P does not allow him to do so. The text message 511 may also request permission from the target user P to allow peer user B's avatar 403 to enter personal space 410. The message box 510 additionally displays instructions 513, 514 for the target user P to allow or reject the request from peer user B. In some embodiments, the instructions 513, 514 may be related to pressing different buttons on the virtual reality controller.

The example scenario in Figure 5 also describes a stranger peer user C's avatar trying to enter the target user's friendly personal space 420. When peer user C's avatar 404 crosses the boundary of the personal space 420, the avatar will not be allowed to approach further. A message box similar to the one discussed above will be automatically displayed in the graphical user interface of the target user P to seek approval for entering the personal space 420.

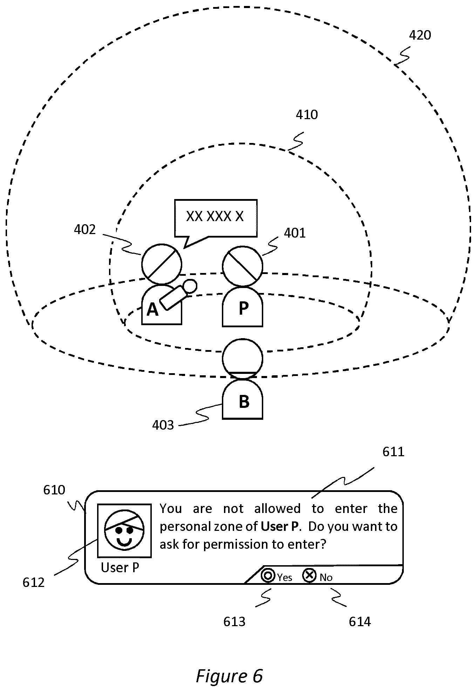

Figure 6 illustrates an example scenario from the first person view of a peer user when the avatar of the peer user is approaching the target user's personal space in a multi-user virtual environment system in accordance with embodiments of the present application. In the example scenario, peer user B has a friendly relationship with target user P and can therefore enter the friendly personal space 420 of the target user P at will. Nevertheless, peer user B's avatar 403 is not allowed to enter the intimate personal space 410 of the target user P since user B's relationship level with target user P is not high enough.

In this case, when peer user B's avatar 403 crosses the boundary of the intimate personal space 410, the graphical user interface of peer user B may automatically display a message box 610. The message box 610 may contain a portrait 612 of peer user P's avatar 401 and a text message 611 notifying peer user B that he/she is not allowed to enter the personal space 410 of target user P. The text message 611 may further prompt peer user B to request target user P's permission for entering the intimate personal space 410. The message box 610 may additionally display instructions 613, 614 for the target user B to allow or refuse to make the request. According to embodiments of the present application, the instructions 613, 614 may be related to pressing different buttons on the virtual reality controller. In some embodiments, message box 610 only pops up when peer user B confirms to seek approval for entering the personal space.

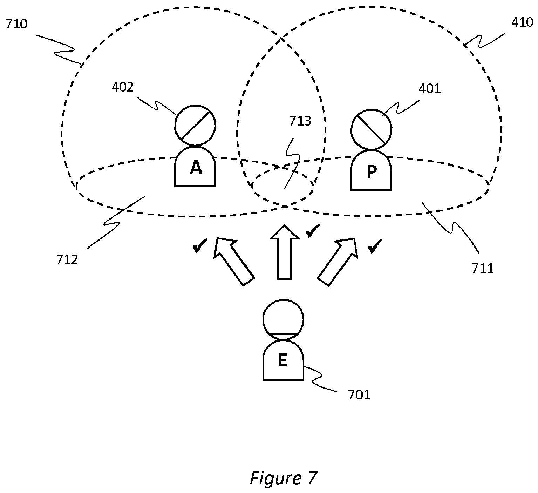

Figure 7 illustrates an example scenario showing the aggregation of multiple personal spaces in a multi-user virtual environment system in accordance with embodiments of the present application. In the example scenario, the avatars 401, 402 of user P and user A are close enough so that their personal spaces 410, 710 with respect to peer user E intersect at region 713. In this case, it is desirable to increase the dimensions of the personal space such that a larger personal space is created for a large crowd of avatars to avoid feeling overwhelmed. For example, the personal spaces of the friendly users present at the same location may be merged to form a larger personal space in the virtual environment.

In the example scenario illustrated by Figure 7, since peer user E has a positive relationship with both user P and user A, an aggregating set operation may be performed on the personal spaces 410, 710. As a result, the avatar 701 of peer user E is allowed to enter the non-overlapping regions 711, 712 as well as the overlapping region 713. The dynamics of the aggregating set operations for personal spaces of multiple users in vicinity is based on Fritz Heider's balance theory from the field of Psychology.

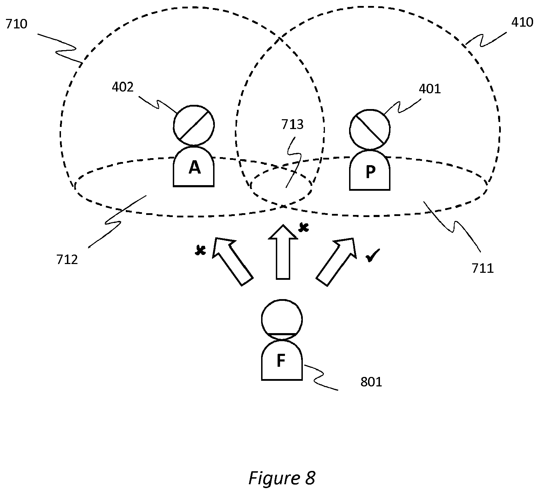

Figure 8 illustrates another example scenario showing the subtraction between multiple personal spaces in a multi-user virtual environment system in accordance with embodiments of the present application. In the example scenario, the avatars 401, 402 of user P and user A are close enough so that their personal spaces 410, 710 with respect to peer user F intersect at region 713.

Since peer user F has a positive relationship with user P but a negative relationship with user A, a subtracting set operation may be performed on the personal spaces 410, 710. As a result, the avatar 801 of peer user F is allowed to access the non-overlapping region 711 which is part of user A's personal space 410. Nonetheless, the avatar of peer user E is not allowed to enter the overlapping region 713 and non-overlapping 712 which altogether form the personal space 710 of user A. The dynamics of the subtracting set operations for personal spaces of multiple users in vicinity is also based on Fritz Heider's balance theory.

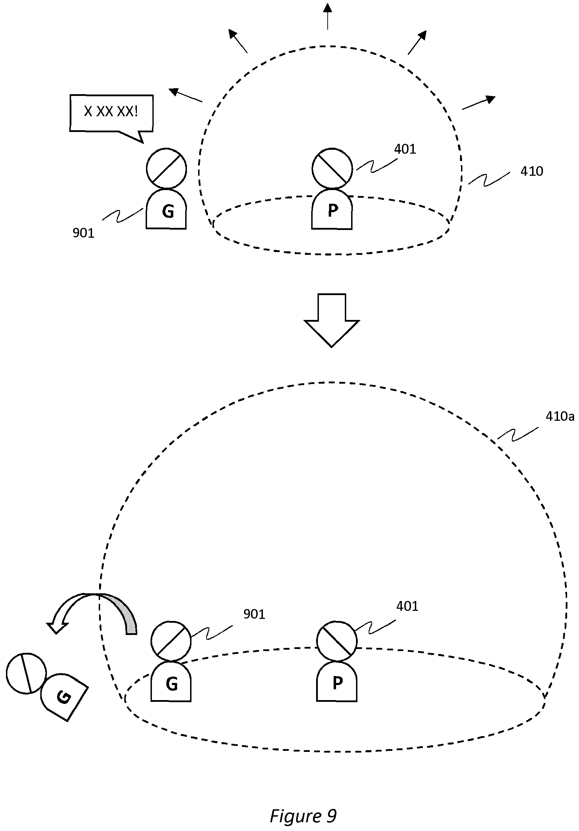

Figure 9 illustrates an example scenario showing the expansion of personal space in a multi-user virtual environment system in accordance with embodiments of the present application. In the example scenario, peer user G's avatar 901 situated outside target user P's personal space 410 performs an interaction with user P's avatar 401. However, the interaction, for example using rude language in a conversation, is considered to be offensive by target user P. In this occasion, user P may protect himself/herself from such nuisance by issuing an instruction via the input device 140, such as a button press on a virtual reality controller, to lower the relationship level with peer user G. The effect of reduced relationship level may lead to an expansion of the dimensions of target user P's personal space (from 410 to 410a) with respect to peer user G. In the event that peer user G's avatar 901 is still within the personal space 410a after the expansion, the avatar 901 may be pushed further away from target user P's avatar 401, and knocked out of the expanded personal space 410a. Alternatively, voice, chat, and/or gestures of peer user G within the expanded space may now be muted without moving peer user G.

Figure 10A and 10B illustrate rule-based models for determining the dimensions of a personal space in a multi-user virtual environment system 100 in accordance with embodiments of the present application. As described above, the dimensions of a personal space may be determined by the personal space model 330 based on the relationship level between the target user and the peer user. In some embodiments of the present application, the personal space model 330 may be implemented by rule-based algorithms, as illustrated in Figure 10A. The first row of the table in Figure 10A represents example categories of user relationship in the virtual environment:
- Relationship level 1: users of public relationship, including strangers.
- Relationship level 2: users of social relationship, including acquaintances, schoolmates and colleagues.
- Relationship level 3: users of personal relationship, including friends, extended family members.
- Relationship level 4: users of intimate relationship, including partners, core family members.

The user relationship level may be determined based on the relationship score maintained by the user relationship module 320, as previously described with reference to Figure 3. For instance, relationship score in the range of 1 to 2 may be mapped to relationship level 1; relationship score in the range of 3 to 5 may be mapped to relationship level 2; relationship score in the range of 6 to 8 may be mapped to relationship level 4; and relationship score in the range of 9 to 10 may be mapped to relationship level 4.

In the meantime, the first column of the table in Figure 10A represents examples of social distance in the virtual environment for respective user relationship levels, and effectively determines the size of the personal space with respect to a peer user.

The table in Figure 10A further shows the rules to be applied to a peer user which depend on the relationship category with the target user and the distance from the target user's avatar in the virtual environment. For example, a peer user having a level 2 relationship with the target user is allowed to access regions in the digital space as close as 1 metre from the target user's avatar and perform actions such as emotes and chats. As noted previously herein, the relationship level corresponding to a peer user is dynamic and may change with the nature of interactions between the peer user and the target user in the virtual environment. For instance, the peer user originally in level 2 relationship with the target user may be promoted to level 3 by the target user, or by an increase of the relationship score maintained by the user relationship module 320. As a result, the avatar of the peer user may now get closer to the avatar of the target user up to a distance of 50cm.

According to embodiments of the present application, the personal space model may apply a different set of rules under different modes or status of the target user. For example, the rules illustrated in Figure 10A may be applied when the user is in an available mode. However, when the user wishes to focus on a particular task in the virtual environment such as watching a movie, the user status may be changed from available mode to busy mode. Alternatively or in addition, the user may manually change the user status as required. Following the change of user status to busy mode, a new set of rules illustrated in the table of Figure 10B may apply to the peer users nearby so as to provide personal spaces with greater privacy. For example, in busy mode, no avatars can get closer than 50 cm to the target user's avatar even for peer users of level 4 relationship. Alternatively or in addition, the virtual environment server 110 may detect negative social interactions performed on the target user by the peer user, in which case the personal space model 330 may apply a different set of rules such as the one illustrated in the table of Figure 10B. This may include increasing the dimensions of the personal space with respect to the peer user, and escalate the restriction of the peer user's interactions with the target user. For example, a peer user who was allowed to move and chat in the target user's personal space, may still move around but is restricted from chatting after escalation of the rules.

As noted elsewhere herein, whilst a multilevel relationship model may be used, optionally simpler models may be used. At the most basic, a 'do not disturb' model may exclude everyone from a personal zone, either physically or with respect to audio / visual communication. At a next level a binary relationship may be implemented, so that the target user can admit peer users, or define a class of admissible users (e.g. on a friends list, and/or having predefined properties such as an age range similar to their own, or peers planning to play the same game).

Figure 11 is an example neural network 1100 for determining the dimensions of a personal space in a multi-user virtual environment system 100 in accordance with embodiments of the present application. In some embodiments, the neural network 1100 comprises an input layer of nodes 1105, a hidden layer of nodes 1110 and an output layer of nodes 1115. Although one hidden layer is shown in Figure 11, it is envisaged that the neural network may include a number of hidden layers. Data set is fed into neural network 1100 as training data set to perform training. The data set may include inputs such as relationship score with the peer user, data describing the current virtual environment event (for example, colleagues' avatars may be assigned with a smaller personal space when collaborating or having a meeting discussion), stress biometrics of target user, message text or speech of the peer user, and behaviour score of the peer user. Other factors may include the appearance of the user's own avatar, and/or the appearance of the peer user's avatar, since chosen appearances can have a correlation with behaviour, and with interactions between avatars with such appearances. Optionally profile data relating to the user and peer user may also be used, such as gender, age, language, and other preference data. In particular, offensive message text or speech may be separately detected by known algorithms or chat filters for speech recognition and linguistic analysis. Further, the behaviour score of the peer user may reflect the history of the peer user's conduct in the virtual environment, and the outputs chosen by a sample of users under such circumstances, such as the size of personal space and restrictive rules to be applied in the personal space. Machine learning is implemented by comparing the outputs at the output layer and the chosen outputs by sample users based on the training data set. The parameters or weights of the neural network nodes are then adjusted by known machine learning algorithms to align the output at the output layer and the manually chosen output for each training data in the training data set.

Once the training has been completed, the virtual environment server 110 can utilize the neural network 1100 in the personal space model 330 for automatically calculating the size of the personal space and rules to be applied to a peer user situated in the personal space.

According to embodiments of the present application, the weights of the neural network 1100 obtained by training on the small sample dataset may be used as a starting point, the neural network 1100 is incrementally trained and updated over time through online learning on the basis of observations on the target user's behaviour, such as his/her choices of controlling the personal space with respect to various circumstances in the virtual environment. For example, if the target user tends to reduce the size of their personal space to interact with other peer users, the machine learning model can learn the tendency and determine the dimensions of personal space which adapts to the target user's behaviour.

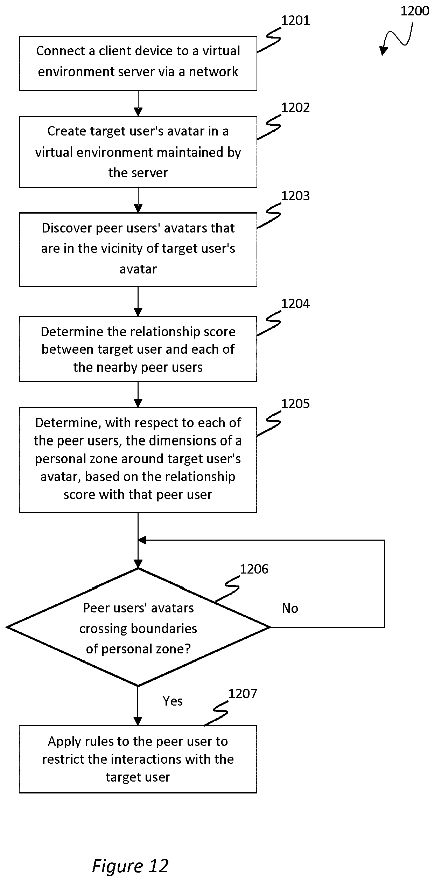

Figures 12 shows a flow diagram describing a computerized process 1200 of protecting personal space in a multi-user virtual environment in accordance with embodiments of the present application. Process 1200 may begin at step 1201, where the target user connects to a virtual environment server 110 via a client device 120 over a network 160, and enters a virtual environment in which the target user can interact with avatars of other peer users and virtual objects.

At step 1202, the avatar creating module 310 creates an avatar for the target user in the virtual environment maintained by the virtual environment server 110. The avatar may be created based on the target user's input regarding the avatar's appearance, clothing and inventories which may be stored as user data in the local storage 122 or remote storage 112.

At step 1203, the virtual environment server 110 discovers any other peer users' avatars that are in the vicinity of the target user's avatar in the virtual environment. In some embodiments, the detection of peer users' avatars may cover all peer users currently logged in to the virtual environment server 110. In some embodiments, the detection may cover a certain district or area in the virtual environment where the target user's avatar is currently located.

At step 1204, the user relationship module 320 determines and maintains, for at least a subset of peer users discovered by the virtual environment server 110, a relationship score representing different levels of relationship between the peer user and the target user. For example, the relationship score may be rated on a 1-to-10 scale with 1 denoting the most hostile relationship and 10 denoting the most intimate relationship. The relationship score may be determined for all existing peer users when the target user enters the virtual environment (or when a new peer user enters the virtual environment) or may be determined when a peer user first approaches a potential personal zone boundary of the target user, and/or a same predetermined region of the virtual environment.

At step 1205, the personal space model 330 determines, with respect to each of the discovered peer users, the size or dimensions of a personal space around the target user's avatar based on factors including the relationship score determined by the user relationship module 320 in association with that peer user. Other factors that may be considered when determining the size and dimensions of the personal space include: virtual environment event data, stress biometrics of target user, and behaviour score of peer user. According to embodiments of the present application, the biometric measurement device 150 monitors the target user's stress level based on biometric measurements such as heart rate, breath rate, or blood pressure. Data related to the measured stress level is transmitted to the virtual environment server 110 and the personal space model 330 may increase the dimensions of the personal space when the measured stress level increases.

According to embodiments of the present application, the virtual environment server 110 further detects negative social interactions performed on the target user by the peer user, in which case the personal space model 330 may increase the dimensions of the personal space, and escalate the restriction of the peer user's interactions with the target user. In some embodiments, the personal space model 330 may be implemented by rule-based algorithms as described previously with reference to Figures 10A and 10B. In some alternative embodiments, the personal space model 330 may be implemented by neural network algorithms which are more flexible and adaptive comparing to rule-based algorithms, as described previously with reference to Figure 11.

At step 1206, the trespasser detecting module 350 monitors for any peer user's avatar crossing the boundary of the target user's personal space. In the event that a peer user's avatar approaches the boundary of the personal space, the process then moves to step 1207 where the rule enforcing module 360 apply rules or requirements to the peer user to restrict his/her interactions with the target user. According to embodiments of the present application, the rules applied to the peer user whose avatar enters the personal space may include: restricting movements of the peer user, silencing a chat of the peer user, disabling an action of the peer user, and nullifying an effect of the peer user's action such as using a virtual object. Alternatively, the virtual environment server may activate the personal space and apply the restrictive rules only when a peer user's avatar approaches the target user within a predetermined distance above a threshold speed.

According to embodiments of the present application, the virtual environment server 110 checks whether a personal space serves to block a path in the virtual environment (e.g. an exit), in which case the rule enforcing module 360 may allow peer users to pass through the personal space. Although the rule enforcing module 360 does not restrict movements of peer users in the personal space, those peer users without sufficiently high relationship level will not be allowed to perform other interactions with the target user. For instance, a stranger peer user's avatar may cross the boundaries of the personal space of the target user's avatar who is standing next to an exit of a room, but he/she may not be allowed to chat with the target user.

Alternatively, any effect of the interactions performed by those peer users without sufficiently high relationship level when they pass through the personal space will be nullified. For instance, a stranger peer user's avatar may cross the boundaries of the personal space of the target user's avatar who is standing next to an exit of a room, but a cheering action performed by him/her will not be visible to the target user.

Alternatively, those peer users without sufficiently high relationship level will be faded out of view of the target user when they are passing through the personal space. This prevents griefing with a personal space whilst also still protecting a user who is innocently (if thoughtlessly or ineptly) blocking a route.

Hence more generally, optionally a personal space may not be used to forcibly move or block peer users within the environment, or if so then only for the target user's local representation of them rather than the peer user's own position within the environment (e.g. so that the peer seems to move away for the target user, or fade from view, or not emote, but in fact can stay close or move past, remain visible and emote within their own representation of the space).

It will be appreciated that whilst the above techniques may be applied to peer users as they approach a target user, optionally they may not be applied or may be differently applied when the target user approaches a peer user. Hence for example referring back to Figure 8, if user F approaches user A, then they may be blocked or muted for user A. However if user A moves towards user F, this can be seen as a desire to raise their relationship level (potentially only temporarily) and so user F is no longer blocked or muted, or is treated as being at a level appropriate to A's chosen distance from them as per figures 10A or 10B. This may be separate to user F's experience, where user A in turn effectively approaches them and so may still be blocked or muted for user F.

Optionally a friend-of-a-friend rule may be used, so that in the scenario of Figure 8, users A and F are promoted by at least one level with respect to each other whilst A is sharing a personal zone with P.

According to embodiments of the present invention, the trespasser detecting module 350 may optionally notify the peer user when it detects the peer user's avatar crossing the boundary of the personal space of the target user. Alternatively and in addition, the trespasser detecting module 350 may optionally prompt the target user to allow the peer user's avatar to enter the personal space.

It will be appreciated that the above methods may be carried out on conventional hardware suitably adapted as applicable by software instruction (e.g. virtual environment server 110 and client device 120) or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Hence in a summary embodiment of the present description, a multi-user virtual environment system comprises the following.

Firstly, an avatar creating module (e.g.: avatar creating module 310) is configured (for example by suitable software instruction) to generate an avatar for a target user in the multi-user virtual environment, as described elsewhere herein.

Secondly, a user relationship module (e.g.: user relationship module 320) is configured (for example by suitable software instruction) to determine a relationship score between the target user and a peer user, as described elsewhere herein.

Thirdly, a personal space generating module (e.g.: personal space generating module 340) is configured (for example by suitable software instruction) to create a personal space around the avatar of the target user, as described elsewhere herein. In particular, a personal space model (e.g.: personal space model 330) is configured to compute the dimensions of the personal space based on the relationship score with the peer user, as described elsewhere herein.

Fourthly, a trespasser detecting module (e.g.: trespasser detecting module 350) is configured (for example by suitable software instruction) to detect the peer user's avatar crossing the boundary of the personal space, as described elsewhere herein.

Fifthly, a rule enforcing module (e.g.: rule enforcing module 360) is configured (for example by suitable software instruction) to apply rules to the peer user to restrict the interactions between the peer user and the target user, as described elsewhere herein.

It will be apparent to a person skilled in the art that variations in the above system corresponding to the various embodiments of the method as described and claimed herein are considered within the scope of the present invention, including but not limited to that:
- In an instance of the summary embodiment, the rules applied to the peer user restrict movements of the peer user, silence a chat of the peer user, disable an action of the peer user, or nullify an effect of the peer user's action, as described elsewhere herein;
- In an instance of the summary embodiment, the method comprises the step of notifying the peer user when his/her avatar approaches the personal space of the target user, as described elsewhere herein;
- In an instance of the summary embodiment, the method comprises the step of prompting the target user to allow the peer user's avatar to enter the personal space when the peer user's avatar approaches the personal space of the target user, as described elsewhere herein.
- In an instance of the summary embodiment, the method comprises the step of:
   i. monitoring the target user's stress level based on biometric measurements; and
   ii. increasing the dimensions of the personal space when the stress level increases,
   as described elsewhere herein;
- In an instance of the summary embodiment, the method comprises the step of:
   i. detecting negative social interactions performed by the peer user;
   ii. increasing the dimensions of the personal space; and
   iii. escalating the restriction of the peer user's interactions with the target user,
   as described elsewhere herein;
- In an instance of the summary embodiment, the method comprises the step of:
   i. detecting threatening objects crossing the boundary of the personal space; and
   ii. restricting movement and effects of the threatening objects,
   as described elsewhere herein;
- In an instance of the summary embodiment, the method comprises the step of aggregating personal spaces of a first target user and a second target user, when both the first and second target users have a friendly relationship score with the peer user, so that the peer user can access the intersection of the personal spaces, as described elsewhere herein;
- In an instance of the summary embodiment, the method comprises the step of subtracting personal spaces of two target users, when one of the target users has a hostile relationship score with the peer user, so that the peer user cannot access the intersection of the personal spaces, as described elsewhere herein;
- In an instance of the summary embodiment, the dimensions of the personal space is computed using a machine learning algorithm trained by the target user's historical data comprising the instructions of the target user to control the dimensions of the personal space under various situations, as described elsewhere herein;
- In an instance of the summary embodiment, the method comprises the step of activating the personal space when a peer user's avatar approaches the target user within a predetermined distance above a threshold speed, as described elsewhere herein; and
- In an instance of the summary embodiment, the method comprises the step of:
   i. increasing the relationship score when a positive social interaction happens between the target user and the peer user; and
   ii. reducing the relationship score when a negative social interaction happens between the target user and the peer user
   as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method for protecting personal space in a multi-user virtual environment, comprising the steps of:
generating an avatar for a target user in the multi-user virtual environment;
determining a relationship score between the target user and a peer user;
creating a personal space around the avatar of the target user, wherein the dimensions of the personal space is computed based on the relationship score with the peer user;
detecting the peer user's avatar crossing the boundary of the personal space; and
applying rules to the peer user to restrict his/her interactions with the target user.

2. The method for protecting personal space according to claim 1, wherein the rules applied to the peer user restrict movements of the peer user.

3. The method for protecting personal space according to claim 1, wherein the rules applied to the peer user silence a chat of the peer user, disable an action of the peer user, or nullify an effect of the peer user's action.

4. The method for protecting personal space according to claim 1, further comprising the steps of, when the peer user's avatar approaches the personal space of the target user, notifying the peer user and prompting the target user to allow the peer user's avatar to enter the personal space.

5. The method for protecting personal space according to claim 1, further comprising the steps of:
monitoring the target user's stress level based on biometric measurements; and
increasing the dimensions of the personal space when the stress level increases.

6. The method for protecting personal space according to claim 1, further comprising the steps of:
detecting negative social interactions performed by the peer user;
increasing the dimensions of the personal space; and
escalating the restriction of the peer user's interactions with the target user.

7. The method for protecting personal space according to claim 1, further comprising the steps of:
detecting threatening objects crossing the boundary of the personal space; and
restricting movement and effects of the threatening objects.

8. The method for protecting personal space according to claim 1, further comprising the step of aggregating personal spaces of a first target user and a second target user, when both the first and second target users have a friendly relationship score with the peer user, so that the peer user can access the intersection of the personal spaces.

9. The method for protecting personal space according to claim 1, further comprising the step of subtracting personal spaces of two target users, when one of the target users has a hostile relationship score with the peer user, so that the peer user cannot access the intersection of the personal spaces.

10. The method for protecting personal space according to claim 1, wherein the dimensions of the personal space is computed using a machine learning algorithm trained by the target user's historical data comprising the instructions of the target user to control the dimensions of the personal space under various situations.

11. The method for protecting personal space according to claim 1, further comprising the step of activating the personal space when a peer user's avatar approaches the target user within a predetermined distance above a threshold speed.

12. The method for protecting personal space according to claim 1, further comprising the steps of:
increasing the relationship score when a positive social interaction happens between the target user and the peer user; and
reducing the relationship score when a negative social interaction happens between the target user and the peer user.

13. A computer program comprising computer executable instructions adapted to cause a computer system to perform the method for any one of the preceding claims.

14. A system for protecting personal space in a multi-user virtual environment, comprising:
means for generating an avatar for a target user in the multi-user virtual environment;
means for determining a relationship score between the target user and a peer user;
means for creating a personal space around the avatar of the target user, wherein the dimensions of the personal space is computed based on the relationship score with the peer user;
means for detecting the peer user's avatar entering the personal space; and
means for applying rules to the peer user to restrict his/her interactions with the target user.

15. The system for protecting personal space according to claim 14, further comprising:
means for detecting negative social interactions performed by the peer user;
means for increasing the dimensions of the personal space; and
means for escalating the restriction of the peer user's interactions with the target user.
